# FASCICULE DE BREVET EUROPEEN

(11) **EP 1 086 323 B1**
(45) Date de publication et mention de la délivrance du brevet: **17.12.2003**
(21) Numéro de dépôt: 00918944.0
(22) Date de dépôt: 11.04.2000
(51) Int. Cl.: F16G 3/02, F16G 3/08

(54) **AGRAFE POUR BANDE TRANSPORTEUSE A FIXATION PAR VIS**
KLAMMER MIT SCHRAUBBEFESTIGUNG FÜR FÖRDERRIEMEN
SCREWED CONVEYOR BELT FASTENER

(30) Priorité: 12.04.1999 FR 9904569
(43) Date de publication de la demande: 28.03.2001
(73) Titulaire: Aser, F-42405 Saint-Chamond (FR)
(72) Inventeur: JAKOB, Horst, F-30360 Deaux (FR)
(74) Mandataire: Breese, Pierre
(86) Numéro de dépôt international: FR0000927
(87) Numéro de publication internationale: WO00061966

(56) Documents cités:
- GB-A- 464 068
- US-A- 4 558 492

## Description

On connaît de GB-A-464068 des agrafes de jonction pour bandes transporteuses, courroies et produits similaires qui comportent des éléments de charnière et sont susceptibles d'être fixées à cheval sur une extrémité de bande transporteuse, les éléments de charnière pouvant être placés entre des éléments de charnière semblables, appartenant à une agrafe semblable fixée à l'autre extrémité de bande transporteuse, les deux agrafes étant reliées par une tige de liaison et d'articulation passant alternativement dans un élément de charnière appartenant à l'une des deux agrafes et dans un élément de charnière appartenant à l'autre des deux agrafes.

Les agrafes de ce type général peuvent être reliées à l'extrémité de la bande transporteuse par des rivets, des systèmes vis-écrou, des pointes rabattables, des crampons à deux pointes rabattables. Ces rivets, vis, pointes ou crampons passent dans des trous ménagés dans la moitié haute de l'agrafe, traversent la bande transporteuse, passent dans des trous ménagés dans la moitié basse de l'agrafe et sont verrouillés de l'autre côté par formation d'une seconde tête de rivet, vissage d'un écrou, ou rabattement des extrémités des pointes ou des crampons à deux pointes.

Le problème majeur rencontré avec ces systèmes de fixation très rigide est la rupture des rivets, des vis ou des tiges de pointes ou de crampons, causée par les contraintes que subissent ces assemblages rigides lors du fonctionnement de la bande transporteuse dans des conditions d'utilisation sévères. Même les crampons à deux pointes arrivent à se casser, en particulier en raison des contraintes imposées lors du passage sur les rouleaux d'entraînement ou de renvoi sur lesquels passe la bande transporteuse. Ces casses causent des dégâts et provoquent des temps d'arrêt répétés pour réparation.

La présente invention a pour but de développer une nouvelle agrafe pour bande transporteuse dans laquelle le moyen de fixation est constitué par des vis, mais l'ensemble des moyens utilisés autorisant une certaine souplesse de la liaison par vis des deux moitiés, haute et basse, de l'agrafe, cette souplesse étant indispensable pour assurer la longévité de la liaison et/ou de l'agrafe, en raison des différences de parcours entre la face inférieure et la face supérieure de la bande transporteuse, lors du passage sur les rouleaux d'entraînement et de renvoi.

Ce problème est résolu par une agrafe de jonction pour bande transporteuse, comportant deux plaques de fixation reliées par des éléments de charnière en forme de U, présentant, dans l'une des deux plaques de fixation, des trous permettant le passage d'une vis et la retenue de sa tête et dans l'autre plaque de fixation des soyages qui sont orientés vers la première plaque de fixation, les vis passées dans les trous de la première plaque de fixation pouvant être vissées dans les soyages qui sont disposés en alignement avec les trous correspondants de la première plaque de fixation lorsque l'agrafe est resserrée sur une extrémité de bande transporteuse, caractérisée en ce que les soyages présentent à leur base des degrés s'étendant sur une partie de leur circonférence extérieure, mais séparés par deux secteurs circulaires dépourvus de degré diamètralement opposés, orientés généralement dans la direction longitudinale de la bande transporteuse sur laquelle l'agrafe selon l'invention est posée (ou sera posée), la matière de la plaque de fixation étant cisaillée à l'emplacement de ces secteurs circulaires non déformés afin de permettre la formation du degré entourant partiellement le soyage par emboutissage de la plaque de base.

Dans une forme de réalisation de l'invention, le soyage est fileté intérieurement au pas des vis employées pour fixer l'agrafe sur l'extrémité de la bande transporteuse. Cependant un tel filetage n'est pas absolument nécessaire car lorsque la cheminée du soyage a une surface lisse, l'emploi de vis auto-taraudeuses permet une fixation d'excellente tenue, d'autant plus que dans le cas d'une utilisation normale, ces vis ne sont jamais dévissées et revissées.

Il est avantageux que les trous pratiqués dans l'une des plaques de fixation et destinés au passage des vis soient dotés d'une embouchure en forme de cuvette permettant de loger les têtes de vis afin que celles-ci ne dépassent pas du plan de la face extérieure de l'agrafe.

Comme les degrés pratiqués par emboutissage des soyages forment une cuvette sur le côté extérieur de la plaque munie de soyages, même si les vis dépassent quelque peu de la cheminée du soyage, la longueur des vis peut être telle que l'extrémité des vis ne dépasse pas du plan de la face extérieure de la plaque de fixation munie de soyages, c'est-à-dire que l'extrémité des vis se situe dans l'espace compris entre la base de la cheminée du soyage et le plan de la face extérieure de la plaque de fixation munie de soyages.

Ainsi, les jonctions ne comportent pas d'aspérités qui pourraient, autrement, être constituées par les têtes des vis ou par leurs extrémités.

Une forme de réalisation va maintenant être décrite à titre illustratif en relation avec le dessin dans lequel :
la figure 1 représente une agrafe selon l'invention vue en perspective,
la figure 2 est une vue en coupe selon la ligne II-II de la figure 1, de l'agrafe selon l'invention de la figure 1, l'agrafe étant rabattue et des vis commençant à être vissées,
les figures 3 et 4 montrent des situations de fonctionnement de l'agrafe selon l'invention.

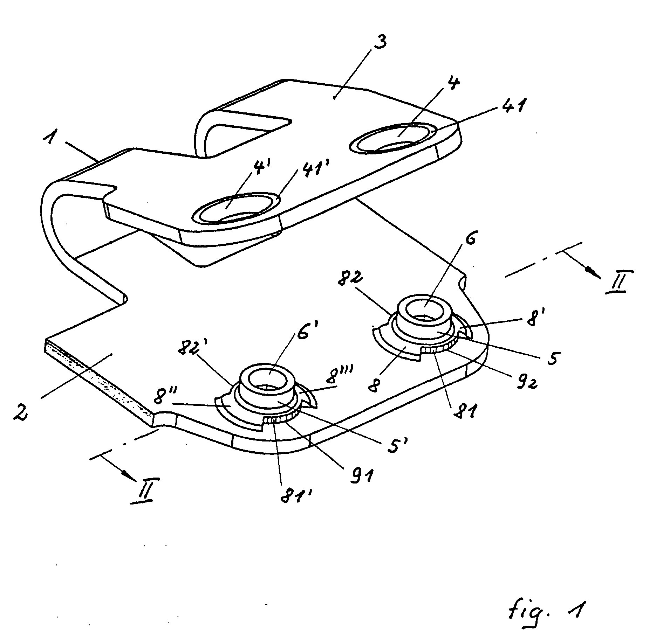

La figure 1 représente en perspective une telle agrafe, présentée individuellement, mais pouvant être réalisée sous forme de bandes d'agrafes du même type, reliées par des ponts de métal de faible longueur. On remarque les éléments de charnière 1 en forme de U, une moitié basse 2 et une moitié haute 3. La moitié haute comporte deux trous 4, 4' ménagés sur le côté opposé à celui des éléments de charnière. Ces trous comportent des cuvettes 41, 41' qui serviront à appuyer les têtes des vis. La moitié basse comporte deux soyages 5, 5' pratiqués dans le métal et qui présentent un trou central formant une cheminée cylindrique 6, 6'. Ces soyages sont orientés vers l'autre moitié de l'agrafe, donc, l'agrafe étant montée, vers la face inférieure de la bande transporteuse.

L'agrafe de la figure 1 est présentée telle qu'elle est livrée, c'est-à-dire avant montage sur l'extrémité de la bande transporteuse. On remarque qu'elle est ouverte, les deux moitiés, haute et basse, n'étant rabattues l'une vers l'autre qu'au montage, en enserrant l'extrémité de la bande transporteuse. On remarque, que du côté intérieur de la moitié basse, les soyages 5, 5' présentent un degré 8, 8', 8'', 8''' qui ne fait pas le tour de sa circonférence, ce degré étant interrompu en 81, 82 et 81', 82'. Des explications seront données plus loin à ce sujet.

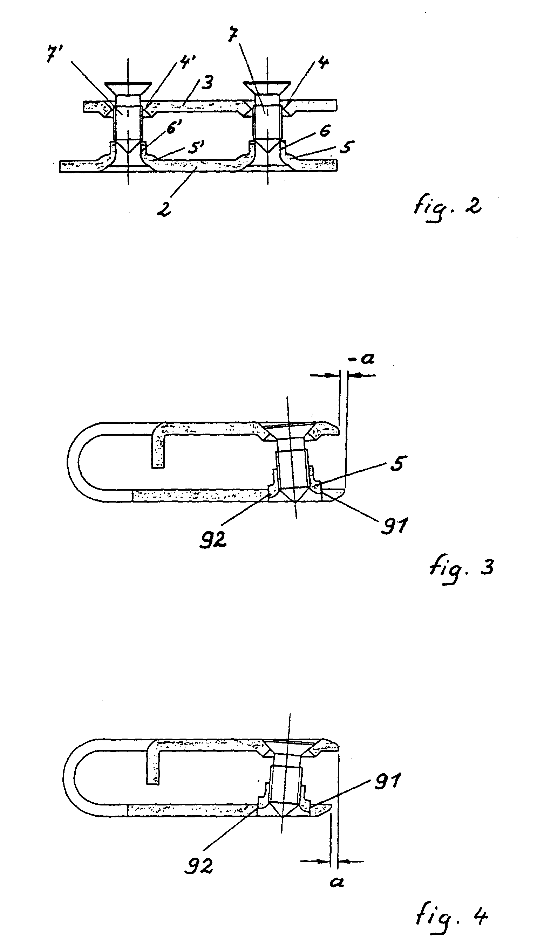

La figure 2 montre en coupe selon la ligne II-II de la figure 1 une agrafe rabattue, les deux moitiés haute et basse étant au moins approximativement parallèles et les trous 4, 4' en alignement avec les cheminées 6, 6' des soyages 5, 5'. On remarque des vis 7, 7' présentées dans les trous 4 et 4'. Les cheminées 6, 6' peuvent porter un filetage intérieur dont le pas et les autres caractéristiques correspondent à ceux des vis. Mais en pratique on préfère que les vis 7, 7' soient des vis auto-taraudeuses et que les cheminées soient lisses à l'intérieur.

On comprend que l'extrémité de la bande transporteuse étant introduite dans l'espace entre les deux moitiés, haute et basse, de l'agrafe, il est possible de faire passer les vis dans les trous 4, 4' puis de leur faire traverser l'épaisseur de la bande transporteuse, les vis faisant elles-mêmes leur trou dans la bande transporteuse. En arrivant au niveau des cheminées 6, 6' des soyages 5, 5' les vis auto-taraudeuses attaquent l'intérieur de la cheminée dans laquelle elles se vissent, en finissant de resserrer les deux moitiés de l'agrafe. Le vissage achevé, les soyages 5, 5', ainsi que l'envers des cuvettes 41, 41' sont enfoncés dans la matière de l'extrémité de la bande transporteuse. La prise de l'agrafe ne provient donc pas uniquement de la présence de la vis traversant la bande transporteuse, mais aussi du pincement par l'envers des cuvettes 41, 41' et par les soyages 5, 5'.

A ce stade de l'exposé rien n'explique encore la souplesse revendiquée pour la fixation de notre nouvelle agrafe.

Les figures 3 et 4 montrent des situations de fonctionnement dans lesquelles on remarque que les vis ne restent pas perpendiculaires aux moitiés, haute et basse, de l'agrafe.

En effet sur la figure 3 la vis est inclinée par rapport à la verticale, sa tête a glissé dans la cuvette, et le soyage est incliné également vers la gauche.

Sur la figure 4 le même phénomène d'inclinaison, mais cette fois vers la droite, peut être observé. Cette inclinaison, provoquée par les contraintes de passage de la bande transporteuse sur des rouleaux d'entraînement ou de renvoi, est le reflet de la différence de trajet des deux moitiés de l'agrafe au passage sur les rouleaux. Cette différence de trajet, à laquelle l'agrafe peut se prêter, se constate par l'écart a, ou - a, qui affecte les extrémités de l'agrafe dans les situations représentées respectivement sur les figures 3 et 4.

Cette inclinaison du soyage 5 (et du soyage 5' non représenté) est rendue possible par le fait que, comme on l'a déjà remarqué sur la figure 1, le soyage ne comporte pas un degré 8 continu sur toute sa circonférence. En effet le degré est supprimé sur les secteurs circulaires 81, 82, 81', 82', c'est-à-dire dans les parties du soyage qui lors de l'utilisation de l'agrafe sont disposées dans la direction longitudinale de la bande transporteuse (direction de fonctionnement). De plus des cisaillageses de la tôle sont pratiquées, ils apparaissent sur les figures 3 et 4, en 91 et 92. Ce sont eux qui, en dehors du fait qu'elles autorisent l'emboutissage du degré 8, permettent le basculement du soyage, qui reste retenu par les parties intactes de son degré 8, c'est-à-dire que ces parties intactes travaillent élastiquement en pivotant légèrement, dans un sens ou dans l'autre, ce qui permet l'inclinaison du soyage, celle de la vis, le glissement de la tête de vis dans la cuvette, et le décalage (a ou - a) des extrémités des moitiés, haute et basse, de l'agrafe. Ce décalage ainsi autorisé permet d'absorber sans contrainte excessive les différences de trajet des faces haute et basse de la bande transporteuse, le soyage revenant à une position normale, les contraintes ayant disparu.

Ainsi, avec la nouvelle agrafe selon l'invention le recours à un mode de fixation rigide par excellence, c'est-à-dire le vissage, est compensé par une souplesse avantageuse obtenue par la conformation originale des soyages.

## Revendications

1. Agrafe de jonction pour bande transporteuse, comportant deux plaques de fixation (2 et 3) reliées par des éléments de charnière (1) en forme de U, présentant dans l'une des plaques de fixation (2 ou 3) reliées par des éléments de charnière (1) en forme de U, présentant des trous (4, 4') permettant le passage d'une vis (7 ou 7') et la retenue de sa tête et dans l'autre plaque de fixation (3 ou 2), des soyages (5, 5') qui sont orientés vers la première plaque de fixation (2 ou 3), les vis (7, 7') passées dans les trous de la première plaque de fixation (2 ou 3) pouvant être vissées dans les soyages qui sont disposés en alignement avec les trous (4, 4') correspondant de la première plaque de fixation (2 ou 3) lorsque l'agrafe est resserrée sur une extrémité de la bande transporteuse, **caractérisée en ce que** les soyages présentent chacun à leur base des degrés (8, 8' et 8'', 8''') s'étendant sur une partie de leur circonférence extérieure, mais séparés par deux secteurs circulaires (81, 82 et 81', 82') diamètralement opposés, dépourvus de degré, orientés généralement dans la direction longitudinale de la bande transporteuse sur laquelle l'agrafe selon l'invention est posée (ou sera posée), la matière de la plaque de fixation étant cisaillée à l'emplacement de ces secteurs circulaires non déformés afin de permettre la formation du degré entourant partiellement le soyage, par emboutissage de la plaque de fixation dans laquelle sont réalisés les soyages.

2. Agrafe de jonction pour bande transporteuse selon la revendication 1, **caractérisée en ce que** les cheminées (6, 6') des soyages (5, 5') sont filetées, leur diamètre, leur pas et leurs autres caractéristiques correspondant à ceux des vis (7, 7').

3. Agrafe de jonction pour bande transporteuse selon la revendication 1 ou 2, **caractérisée en ce que** les trous (4, 4') comportent une embouchure en forme de cuvette 41, 41'.

## Claims

1. Junction clamp for conveyor belt comprising two attachment plates (2 and 3) connected by U-shaped hinge elements (1), one of the attachment plates (2 or 3) connected by U-shaped hinge elements (1) having holes (4, 4') through which screws (7 or 7') can pass and which retain its head, and the other attachment plate (3 or 2) being fitted with bushings (5, 5') that are facing the first attachment plate (2 or 3), the screws (7, 7') passing in the holes in the first attachment plate (2 or 3) possibly being screwed into the bushings that are aligned with the corresponding holes (4, 4') in the first attachment plate (2 or 3) when the clamp is tightened on one end of the conveyor belt, **characterised in that** the base of each of the bushings has sectors (8, 8' and 8", 8"') marked in degrees extending around part of their outer circumference, but separated by two circular sectors (81, 82 and 81', 82') diametrically opposite each other and not marked in degrees, generally oriented along the longitudinal direction of the conveyor belt on which the clamp according to the invention is placed (or will be placed), the material from which the attachment plate is made being sheared at the location of these undeformed circular sectors so that degrees partially surrounding the bushing can be marked by stamping the attachment plate in which the bushings are made.

2. Junction clamp for conveyor belt according to claim 1, **characterised in** the inner surfaces (6, 6') of the bushings (5, 5') are threaded, and their diameter, pitch and other characteristics correspond to the characteristics of the screws (7, 7').

3. Junction clamp for conveyor belt according to claim 1 or 2, **characterised in that** the holes (4, 4') are provided with dish-shaped aperture (41, 41').

## Patentansprüche

1. Verbindungsklammer für ein Förderband mit zwei, durch U-förmige Scharnierelemente (1) verbundenen Befestigungsplatten (2 und 3), welche in einer der durch U-förmige Scharnierelemente (1) verbundenen Befestigungsplatten (2 oder 3) Löcher (4, 4') aufweist, die den Durchgang einer Schraube (7 oder 7') und das Zurückhalten ihres Kopfes erlauben und in der anderen Befestigungsplatte (3 oder 2) Durchzüge (5, 5') aufweist, die zu der ersten Befestigungsplatte (2 oder 3) hin gerichtet sind, wobei die durch die Löcher der ersten Befestigungsplatte (2 oder 3) gezogenen Schrauben (7, 7') in die Durchzüge, welche auf die der ersten Befestigungsplatte (2 oder 3) entsprechenden Löcher (4, 4'), ausgerichtet angeordnet sind, geschraubt werden können, wenn die Klammer an einem Ende des Förderbandes angezogen ist, **dadurch gekennzeichnet, dass** die Durchzüge jeweils an ihrem Fuße Stufen (8, 8' und 8'', 8''') aufweisen, welche sich über einen Teil ihres äußeren Kreisumfangs erstrecken aber durch zwei diametral gegenübergesetzte kreisförmige Abschnitte (81, 82 und 81', 82') ohne Stufe getrennt sind, welche allgemein in Längsrichtung des Förderbandes, auf dem die erfindungsgemäße Klammer angebracht ist (oder angebracht sein wird) gerichtet sind, wobei der Stoff der Befestigungsplatte am Standpunkt der nicht deformierten kreisförmigen Abschnitte geschnitten ist, um die Bildung der teilweise den Durchzug umgebenden Stufen durch das Tiefen der Befestigungsplatte, in welcher die Durchzüge ausgebildet sind, zu erlauben.

2. Verbindungsklammer für ein Förderband nach Anspruch 1, **dadurch gekennzeichnet, dass** die Schornsteine (6, 6') der Durchzüge (5, 5') Gewinde aufweisen, wobei ihr Durchmesser, ihre Teilung und anderen Merkmale denen der Schrauben (7, 7') entsprechen.

3. Verbindungsklammer für ein Förderband nach Anspruch 1 oder 2, **dadurch gekennzeichnet, dass** die Löcher (4, 4') eine schalenförmige Mündung (41, 41') aufweisen.
